# EUROPEAN PATENT APPLICATION

(11) **EP 1 641 244 A2**
(43) Date of publication of application: **29.03.2006**
(21) Application number: 05256049.7
(22) Date of filing: 28.09.2005
(51) Int. Cl.: H04N 1/60

(54) **Method and system using gamut mapping templates to derive actual colour gamut mapping**

(30) Priority: 28.09.2004 US 951738
(71) Applicant: Monotype Imaging, Inc., Woburn, Massachusetts 01801 (US)
(72) Inventor: De Baer, Dirk c., Berchem B-2600 (BE)
(74) Representative: Gallafent, Richard John

(57) **Abstract**

A mapping method, programme and device provide an explicit mechanism for the user to control the gamut mapping. Specifically, hints in the mapping are set by the user to influence the outcome of the mapping and achieve the desired result. In effect, the gamut mapping is defined by example. The mapping may be defined relative to a reference gamut and specifically the mapping is created by defining reference points in the gamut. Alternatively, areas of the purest colour can also be used as the locations for providing the hints. Further, colour combinations, such as cyan plus magenta, cyan plus yellow, cyan plus blue, blue plus yellow, blue plus magenta and yellow plus magenta and 100% of the corresponding colourants are added to the list of hints. Then, the mapping is defined relative to those points.

## Description

Images are typically recorded and stored as contone images in which each image element has a color tone value. For example, consider a digitally stored color image--each image element will typically have corresponding values that set tone, among 256 gradations, for example, for each of the three primary colors.

For most print or rendering systems, it is necessary to convert the input or source contone image, in some color space, to a colorant space of the target device, or destination color space. Many times images are stored such that the pixel level data are in terms of levels of red, green, and blue (RGB). This is most convenient when rendering on common display devices.

Computer display monitors and television displays are made up of red, green, and blue phosphors. They display colors using an additive process. In contrast, standard printing systems are usually based on a four color pallet of cyan, magenta, yellow, and black (CMYK). Since many printers produce color by depositing ink on paper, the colors blend on the page. This is known as a subtractive process or mixture.

For precise rendering, additional information is required beyond the color levels. Digital color management is used to comprehend the idiosyncrasies of the particular device that is used to render the image. For example, when considering the specific, color values associated with a pixel and each of red, green, and blue color levels, the actual displayed color may be different from the precise values, since monitors tend to be different from one another. Consequently, identical RGB numbers can yield different colors on different monitors or other rendering devices such as printers.

In order create a more precise meaning to the RGB values, for example, some give a reference to a particular real or ideal monitor, or a particular real or ideal printer, if the image is represented in CMYK values. This reference is known as the profile and is many times incorporated into the image, with the image data. As a result, the digital RGB image is often made up of the RGB levels, for example, and a profile. The profile gives the numbers meaning based upon the intent of the image creator.

A related set of problems is encountered when moving between different types of devices. A gamut is the range of colors that a particular device can render or capture. These device-specific gamuts are subsets of an absolute color space, such as for example L*a*b*, which corresponds to the set of colors that are visible to the human eye. As a general rule, the gamut of a printer is normally narrower than a monitor. Here, the device profile is a technique for describing that device's gamut, in terms of an absolute color space. The process of converting from one gamut to another is called gamut mapping.

In the process of authoring content on a computer and rendering that content on some sort of printed matter or display device, it is necessary to comprehend the device profiles of both the monitor and the target rendering or printing device. Moreover, there is a necessity to apply color conversion between the profile of the monitor and the destination profile, usually the profile of the target printing device. Many times the profile of the monitor is relative to the L*a*b* color space, which maps RGB values to L*a*b* values. Similarly, the printers' device profiles are often also defined relative to the L*a*b* color space.

The L*a*b* color space is different from. RGB and CMYK color spaces. It is used to represent color difference as observed by the human eye. The L or lightness channel is defined by a scale extending from 100 (white) to zero (black). The channel contains a gray scale rendition of the image, along with detail information. It does not contain any color information, however. The "a" channel is defined by a scale extending from +128 (red) to - 128 (green), and the "b" channel extends from +128 (yellow) to -128 (blue).

One of the challenges associated with the conversion between the color space of the source device and the target device is comprehending the situation where the target device cannot render a color from the source device and more generally how the gamut of the source image should be fit into the gamut of the target device.

One of the most common techniques for mapping source image data to the color space of a target device is to first print a test chart using the target rendering device, such as a printer. These test charts comprise patches with different densities of the colorants, such as ink or toner. Then, each of these patches is measured to generate a corresponding L*a*b* value. This provides the user with an understanding of target device's gamut and how the various color densities create the various colors within the gamut. From this information, a model of the device is built, usually in the form of a look up table or formula, that maps colorant values, such as cyan, magenta, yellow, and black to L*a*b* values in a device independent color space.

In order to be useful, however, this table or formula must be inverted. Specifically, the source data in an XYZ or L*a*b* format must be mapped to the device color space. Thus, the table is inverted in order to provide the device dependent color data as a function of the device independent color information.

Many times, these tables are not specified to every single combination of L*a*b* to the CMYK values, for example. This would require too many measurements. Instead, representative measurements are made, and then the table created. Then after the table's inversion, the remaining locations in the look up table are populated using an interpolation process.

There are many techniques for performing this interpolation and modification of the gamut mapping, in order to comprehend limitations in the source or target device. Many times, each L*a*b* value is acquired, and then the nearest point on the gamut boundary is acquired in order to get the corresponding CMYK value. In some instances a two step approach is used, where first the black level is not taken into account. Thus, the mapping will usually be lighter than the original L*a*b* value. This is then compensated by adding black until the lightness is matched to the original L*a*b* value.

Often, rules are enforced in the gamut mapping. Most often, smoothness is important to avoid jumps in the CMYK value, which could undermine the quality of the rendered image. Cost functions (ΔE) are also sometimes used. These are based on the difference between the original L*a*b* value and the L*a*b* value of the mapped CMYK value. The mapping is optimized modified in order to minimize this cost function for every point in the map in order to obtain the best quality mapping from the standpoint of the entire gamut.

### SUMMARY OF THE INVENTION

These gamut mappings, can take other issues into account. For example, a higher cost can be assigned to the hue difference, since the human eye is more sensitive to hue. How skin-tones are mapped often requires exact hue tuning. But, in other areas, there may be a desire to loosen the hue constraint. Light from monitors tends to be very saturated in the blue regions. Thus, the hue constraints are often loosened in order to get the strongest blue in the target device. These are further manipulations to the general cost function approach.

Manipulating cost factors and producing the gamut mapping can be a trial and error process, however. Generally, these changes are hand-coded into the gamut mapping and typically require an experienced programmer. Automated solutions such as algorithms, including the Fletcher-Davis algorithm and other hill declining methods, are sometimes used in gamut mapping but typically offer little flexibility. Moreover, the end user had little opportunity to influence the outcome of these gamut mapping processes.

The present invention is directed to a mapping method, program, and device. It provides an explicit mechanism for the user to control the gamut mapping. Specifically, hints in the mapping are set by the user to influence the outcome of the mapping and achieve the desired result. In effect, the gamut mapping is defined by example. The mapping may be defined relative to a reference gamut and specifically, the mapping is created by defining reference points in the gamut. Most often, these reference points include the lightest and darkest regions of the mapping. In addition, areas of the purest color can also be used as the locations for providing the hints. Further, color combinations, such as cyan plus magenta, cyan plus yellow, cyan plus blue, blue plus yellow, blue plus magenta, and yellow plus magenta, and 100% of the corresponding colorants are added to the list of hints. Then, the mapping is defined relative to those points.

In general, according to one aspect, the invention features a method for gamut mapping. This method comprises defining or describing a gamut mapping in a reference color space to thereby define a template gamut map. Then, the template gamut map is used to create a target gamut map to a target device color space of a target rendering device.

In the preferred embodiment, the process further comprises picking a reference gamut and defining the template gamut map relative to the reference gamut. Reference points are then added to the template gamut map. These reference points can be located in the darkest and lightest portions of the template gamut map. In other examples, they are located in the areas of purest color and color combinations of 100% of the colorants.

In the preferred embodiment, the step of using the template gamut map comprises finding a color gamut of the target device and converting the target device gamut into a color space of the template gamut map. Then, the reference gamut is replaced with the target device color gamut. This reference gamut is used to create the template gamut map.

Finally, the target device gamut mapping is converted to the target device color space and used to convert the source image data to the target device image data in the color space of the target device.

In general, according to another aspect, the invention features a gamut mapping template comprising hints describing a gamut mapping to a reference color space. This gamut mapping template is usually located in the storage of a computer device that is running a color profiling system.

In general, according to still another aspect, the invention features a computer software product for gamut map editing. The product comprises a computer readable medium, such as a disk in which program instructions are stored. These instructions, when read by the computer, cause the computer to enable user definition of hints, describing a gamut mapping to a reference color space. This defines a template gamut map that is used to create a target gamut map to a target device color space of a target rendering device.

The above and other features of the invention including various novel details of construction and combinations of parts, and other advantages. will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:

Fig. 1 is a schematic diagram illustrating the environment in which the inventive profile editor operates in one embodiment;

Fig. 2 is plot of the gamut or source image data and target rendering device in L*a*b* color space;

Fig. 3 is a block diagram illustrating the gamut mapping and rendering of the image data in a printing device;

Fig. 4 is a flow diagram showing a process for defining a template mapping; and

Fig. 5 is a flow diagram showing a process for applying the template mapping to produce a gamut mapping to the target device color space

### DETAILED DESCRIPTION OF THE PREFERRED EMBODIMENTS

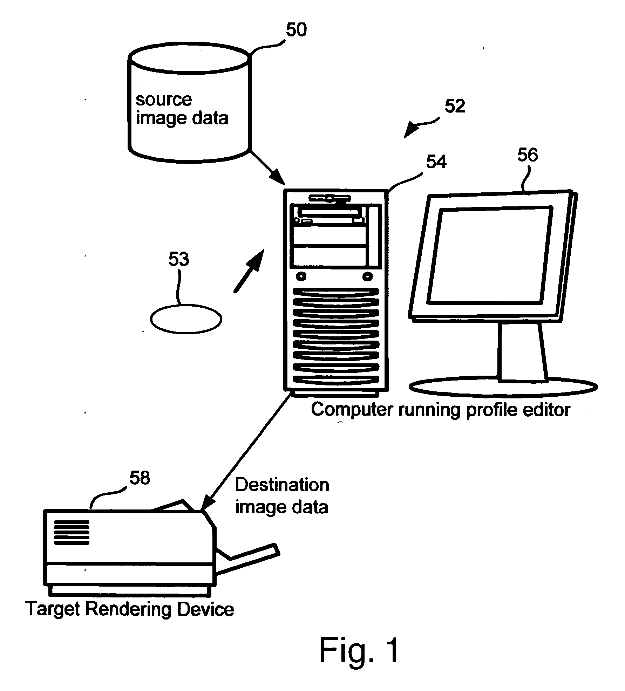

Fig. 1 is a schematic diagram illustrating the typical environment in which the inventive profile editor for gamut mapping is used.

Typically, a datastore 50 holds the source color image data. Typically, if electronically generated or manipulated source color data are used, they are many times in an RGB format. These are typically device dependent formats. Further, profile information is also commonly included with the source color data that references a monitor or type of monitor thereby providing the absolute color reference, for example.

The profile editor runs on a computer 52, which comprises a central processing unit 54 and a display 56. This profile editor is used to convert the source color image data from the datasource 50 to the target device image data in a gamut mapping process. In the typical example, the source color data in the first color space are converted to a color space for a target rendering device 58. This is typically some sort of printer or platesetter/imagesetter as used in offset printing or even another monitor on another computer.

The profile editor, running on the computer 52, provides a mechanism for changing the color profile information and color space, and specifically control the result of the gamut mapping to control how the color data are rendered on the target rendering device 58. Typically, the profile editor is installed on the computer from a disk 53, on which the profile editor machine instructions are stored, or downloaded from a disk or storage device on another computer. These profile edits usually involve changes to the rendering intent, such as saturation, colorimetric, or perceptual rendering intents. They can also adjust the profile to be compatible with the target device 58, by modifying the profile that is associated with the source data, to be consistent with the target device.

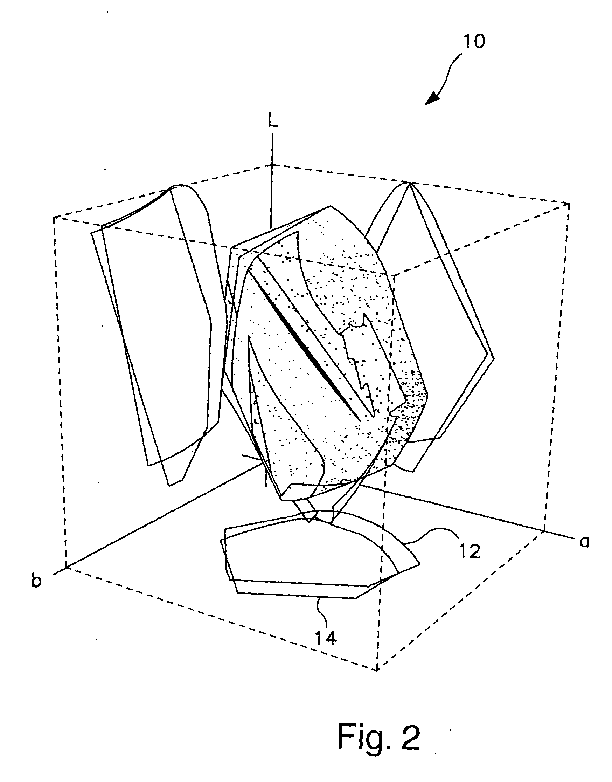

Fig. 2 is a plot of a gamut of source data 12 and of a target printing device gamut 14 in the L*a*b* color space 10. This generally illustrates the problem of gamut mapping, which is that the gamut of the source data and of the target device may not be complete and are often a subset of the chromaticity that the human eye can perceive. Thus, in the process of gamut mapping, accommodations must be made in order to, on one hand, fully utilize the gamut of the target rendering device, while accurately as possible representing the input source image data on the other hand, and at the same time, producing an image that is pleasing to the viewer.

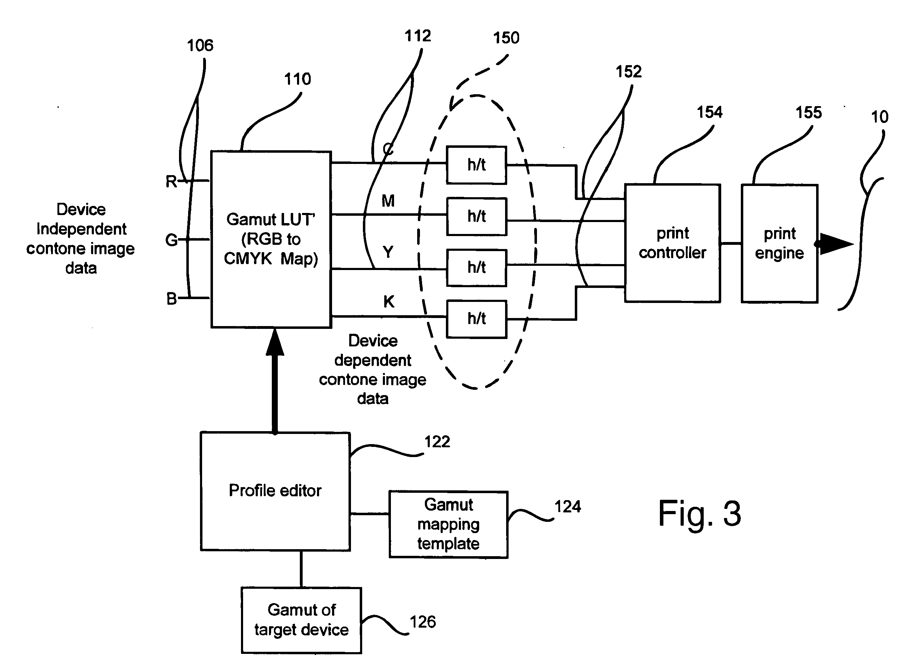

Fig. 3 shows an exemplary rendering process from the source data to a target device or rendering system 58.

Device independent, contone, image data 106 are received by the gamut LUT. This maps from a device independent space to a device dependent space. In the typical example, the data are mapped from an XYZ or L*a*b* color space to a CMYK color space, as is used in the typical print devices.

This gamut mapping is typically loaded into the computer 54 that runs the profile editor 122. The profile editor 122 is typically contained on the disk 53, and then once installed in the computer 54, operates to control the gamut map 110.

According to the preferred embodiment, this profile editor 122 operates in response to a gamut mapping template 124, in addition to information concerning the target print device profile. Typically, this is specified in terms of the gamut 126 of the target print device 58.

Contone color data 112 in the target device color space are received by the rendering system. These destination color data are in the color space, CMYK, for example, of the target printing or rendering device. The color channels CMYK 112 are received at halftoning stages 150. These halftoning stages 150 convert the destination image contone color data into target device halftone color data 152.

The halftone color data produced by the halftone stages 150, for each of C, M, Y, K channels are directly processed by the print engine controller 154. Specifically, the print engine controller 154 converts the halftone color data 152 directly into commands to the print engine 155. In one example, the print engine 155 is an ink jet print head that sprays ink droplets onto media 10, such as paper. However, in other embodiments the print engine is laser printer, imagesetter, or platesetter.

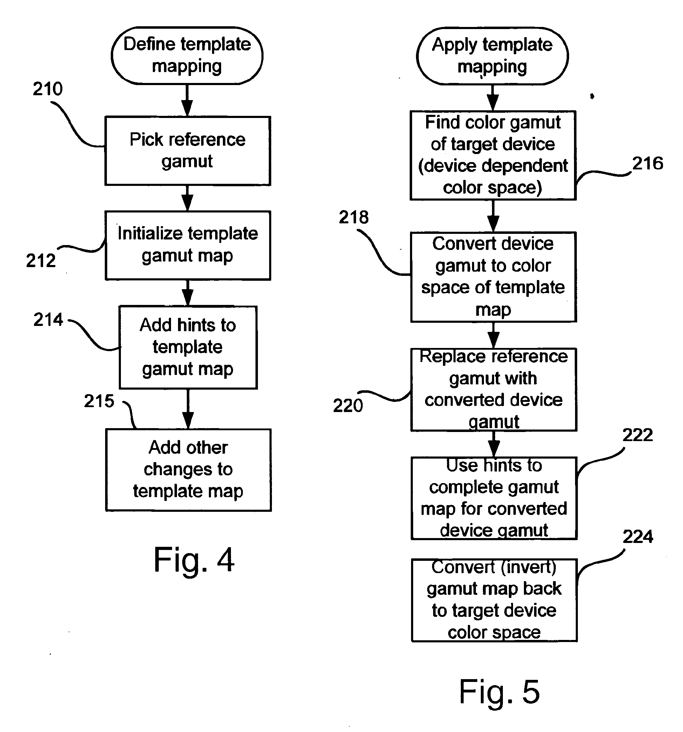

Fig. 4 is a flow diagram illustrating a first operation in the template-based mapping process, which is performed according to the principles of the present invention.

A reference gamut is picked in step 210. Typically, a reference gamut is relative to a well defined color space, such as the XYZ or L*a*b* color space. A reference gamut can be any gamut, but will usually be the gamut of an idealized device such as defined by the ICC. The reference gamut will be used as a typical representative of the gamut for the device class for which a gamut mapping is going to be created. Examples of device classes are the class of laser printers, or class of ink jet printers or class of platesetters, for example

Then, in step 212, this template gamut map is initialized. It provides a generic gamut mapping relative to a predefined, but selectable reference gamut. As part of the initialization, reference points are marked on the gamut. In some cases, these reference points are taken from the darkest regions or lightest regions of the gamut map. In other cases, they are taken from the points of purest color or maximum colorant, such as 100% of cyan and magenta colorants, or cyan and yellow colorants, or cyan and blue colorants, or black and yellow, black and magenta, yellow and magenta colorants.

In addition to the reference points, the gamut is also subdivided in simple shapes, such as simplexes or cubes, to be make it easier to manipulate the shape and size of the gamut. Each intersection point of these shapes is further completed with a device coordinate, or a set of device coordinates, that correctly renders the device independent value at that position of the gamut. This additional information makes it easier to reference the device coordinates while manipulating the gamut. To subdivide the gamut in these shapes, well known methods, such as Delauney triangulation, can be used.

In step 214, hints are added to the template gamut map. These hints are specified relative to the reference points in this template gamut mapping. These hints will provide guidelines for further manipulation of the gamut mapping.

Examples of hints are: (A) the relative importance of preserving hue, chroma and lightness in the mapping, expressed by three values; (B) the stretch/shrink factor at each point in the gamut which says how much or how little the gamut can stretch or shrink there; and (C) the purity of the color: pure colors are rendered with only one or two colorants.

Then, typically, this gamut mapping is modified, manually using a gamut mapping editor or automatically using known gamut mapping algorithms, to achieve the desired gamut mapping. In one example, the hue in one portion of the map is specified. In another area, the degree of saturation is also controlled in order to achieve the desired rendering objectives.

Finally, in step 215, any other changes are applied to the template map. These changes can include application of optimization techniques using a cost functions or other modifications to ensure the smoothness of the gamut map or minimizing a certain error in the mapping.

Fig. 5 illustrates the application of the template mapping, according to the invention.

First, in step 216, the color gamut of the target device is found, such as print engine 58. In one example, this is achieved by printing test patterns, and then measuring the L*a*b* values of the various patches.

Next, in step 218, the device gamut is converted to the color space of the template map. Then, in step 222, the reference gamut is replaced with the converted device gamut. Hints are then used in step 222 to morph or change the template gamut mapping into a gamut mapping of the actual gamut. Finally the mapping is converted to the target device color space in step 224.

The present invention provides a method of defining a fast gamut mapping that can be used in, for example, smart color management modules (CMM) and profile creation packages. The method is such that all tuning of the gamut mapping is done initially and enables the specification of details, such as where pure color or vivid colors are required, then preserved as template, which is then used to quickly instantiate real color gamut mappings. By the use of several templates, preferences can be set up and stored and by doing so, the concept of rendering intent is significantly improved and extended.

This method can be extended to include two or more reference gamuts to define gamut mapping templates for direct device to device color gamut mapping. The method is therefore easily extended to directly define a gamut mapping between two or more devices. Again this direct mapping between devices is based relative on reference devices, and an actual device to device mapping is instantiated by replacing the reference gamuts by the actual gamuts and applying the hints of the template.
In an alternative embodiment, the hints can be translated in a more direct approach.

## Claims

1. A method for gamut mapping, comprising:
defining hints describing a gamut mapping to a reference colour space to create a template gamut map; and
using the template gamut map to create a target gamut map to a target device colour space of a target rendering device.

2. A method according to Claim 1, further comprising:
picking a reference gamut; and
defining the template gamut map relative to the reference gamut.

3. A method according to Claim 1 or 2 wherein the hints are added to the template gamut map.

4. A method according to any one of Claims 1 to 3 wherein the hints specify one or more of:
- colour mapping in the template gamut map;
- colour mapping for darkest regions of the template gamut map;
- colour mapping for lightest regions of the template gamut map;
- colour mapping for at least one point of purest colour of the template gamut map;
- colour mapping for all points of purest colour of the template gamut map; and
- colour mapping for saturation of cyan + magenta or cyan + yellow or cyan + black or black + yellow or black + magenta or yellow + magenta.

5. A method according to any one of Claims 1 to 4 wherein the step of using the template gamut map comprises:
finding a colour gamut of the target rendering device; and
converting the target device colour gamut to a colour space of the template gamut map.

6. A method according to Claim 5 wherein the step of using the template gamut map further comprises:
replacing a reference gamut, used to create the template gamut map with the target device colour gamut; and
completing target device gamut mapping using the hints.

7. A method according to Claim 6 further comprising inverting the target device gamut mapping and using the inverted gamut mapping to convert a source image data to target device image data in a colour space of the target device.

8. A gamut mapping template comprising hints describing a gamut mapping to a reference colour space.

9. A gamut mapping template according to Claim 8 wherein the hints are added to the template gamut map.

10. A gamut mapping template according to Claim 8 or 9 wherein the hints specify one or more of:
- colour mapping in the template gamut map;
- colour mapping for darkest regions of the template gamut map;
- colour mapping for lightest regions of the template gamut map;
- colour mapping for at least one point of purest colour of the template gamut map;
- colour mapping for all points of purest colour of the template gamut map; and
- colour mapping for saturation of cyan + magenta or cyan + yellow or cyan + black or black + yellow or black + magenta or yellow + magenta.

11. A computer software product for gamut map editing, the product comprising a computer-readable medium in which programme instructions are stored, which instructions, when read by a computer, cause the computer to enable user definition of hints describing a gamut mapping to a reference colour space to define a template gamut map that is used to create target gamut map to a target device colour space of a target rendering device.

12. A product according to Claim 11 wherein the product enables user selection of a reference gamut and definition of the template gamut map relative to the reference gamut.

13. A product according to Claim 11 or 12 wherein the hints are added to the template gamut map.

14. A product according to Claim 11, 12 or 13 wherein the hints specify one or more of:
- colour mapping in the template gamut map;
- colour mapping for darkest regions of the template gamut map;
- colour mapping for lightest regions of the template gamut map;
- colour mapping for at least one point of purest colour of the template gamut map;
- colour mapping for all points of purest colour of the template gamut map; and
- colour mapping for saturation of cyan + magenta or cyan + yellow or cyan + black or black + yellow or black + magenta or yellow + magenta.
